# EUROPÄISCHE PATENTANMELDUNG

(11) **EP 2 098 746 A2**
(43) Veröffentlichungstag der Anmeldung: **09.09.2009**
(21) Anmeldenummer: 09002060.3
(22) Anmeldetag: 13.02.2009
(51) Int. Cl.: F16F 6/00, F16F 9/12, B62D 5/00

(54) **Vorrichtung zur Dämpfung einer Drehbewegung**

(30) Priorität: 29.02.2008 DE 102008011858
(71) Anmelder: Gebrüder Frei GmbH & Co. KG, 72461 Albstadt-Onstmettingen (DE)
(72) Erfinder: Schneider, Bernd, 72461 Albstadt (DE); Kennerknecht, Timo, 72461 Albstadt (DE); Friedrich, Markus, 72461 Albstadt (DE)
(74) Vertreter: Hering, Hartmut

(57) **Zusammenfassung**

Bei einer Vorrichtung zur Dämpfung einer Drehbewegung ist an einer sich drehenden Drehachse (5) ein sich mit der Drehachse (5) drehender erster Magnet (M1) vorgesehen, dessen Drehbewegung magnetisch, und somit berührungslos, auf einen zweiten Magneten (M2) übertragen wird, der innerhalb eines mit einer Flüssigkeit (1) gefüllten geschlossenen Gehäuses (4) mit einer Achse (2) verbunden ist und sich mit dieser dreht, wobei mit der Achse (2) weiterhin ein Verdrängungskörper (3) verbunden ist und sich mit dieser dreht.

## Beschreibung

Die Erfindung betrifft eine Vorrichtung zur Dämpfung einer Drehbewegung unter Verwendung eines Verdrängungskörpers.

Es sind Vorrichtungen zur Dämpfung einer Drehbewegung unter Verwendung eines in einem in Flüssigkeit geführten Verdrängungskörpers bekannt. Die Flüssigkeit ist in einem Gehäuse vorgesehen, in welches eine sich drehende Achse geführt ist, an welcher der Verdrängungskörper angebracht ist. Dabei muss eine Abdichtung an der Stelle des Gehäuses vorgesehen sein, an welcher die Achse in das Gehäuse geführt ist. Diese Dichtung ist durch die Drehbewegung der Achse einem Verschleiß ausgesetzt, wodurch mit einer solchen Vorrichtung nur eine begrenzte Anzahl von Dämpfungszyklen möglich ist.

Weiterhin sind bisherige Dämpfungsvorrichtungen oft relativ aufwändig aufgebaut und in Bezug auf die aufzubringende Gegenkraft zur Dämpfung einer Drehbewegung relativ unflexibel. Es gibt auch Fälle, in welchen der Platz zum Einbauen einer Dämpfungsvorrichtung knapp bemessen ist.

DE 60 2004 000 932 T2, welches Dokument als nächstliegend angesehen wird, zeigt eine Vorrichtung zur Dämpfung einer Drehbewegung der Lenkung eines Fahrzeugs, wobei sich in einem mit Flüssigkeit gefüllten Gehäuse eine Achse befindet, wobei mit dieser Achse ein Verdrängungskörper verbunden ist und sich mit dieser dreht.

DE 36 03 812 A1 zeigt eine Radialpumpe zur Förderung von Kühlwasser mit einem an einer Drehachse sich mit der Drehachse drehenden ersten Magneten, dessen Drehbewegung magnetisch, und somit berührungslos, auf einen zweiten Magneten übertragen wird, der innerhalb eines mit der Flüssigkeit gefüllten Gehäuses verbunden ist und sich mit dieser dreht, wobei mit der Achse weiterhin ein Verdrängungskörper verbunden ist und sich mit dieser dreht.

US 2 958 517 A zeigt einen Magnetrührer, wobei ein sich mit der Drehachse drehender erster Magnet vorgesehen ist, dessen Drehbewegung magnetisch, und somit berührungslos, auf einen zweiten Magneten übertragen wird, der innerhalb eines mit einer Flüssigkeit gefüllten geschlossenen Gehäuses mit einer Achse verbunden ist und sich mit dieser dreht, wobei mit dieser Achse weiterhin ein Verdrängungskörper verbunden ist und sich mit dieser dreht.

EP 0 639 727 A1 zeigt einen Vorrichtung zur Dämpfung einer Drehbewegung, die beispielsweise im Aschenbecher oder im Handschuhfach von Fahrzeugen eingebaut wird. In einem mit Flüssigkeit gefüllten geschlossenen Gehäuse befindet sich einen Achse, wobei mit dieser Achse ein Verdrängungskörper verbunden ist und sich mit dieser dreht.

DE 41 40 445 A1 zeigt eine dauermagnetische Stirn- bzw. Zentralkupplung zur Messewert-, Kraft- oder Drehmomentenübertragung, wobei Magnetringe konzentrisch beabstandet angeordnet sind, die jeweils in axialer Richtung magnetisiert sind und die Magnetisierungsrichtung des ersten Magnetrings jeweils entgegengesetzt zu derjenigen des zweiten Magnetrings ist.

DE 20 2004 011 085 U1 zeigt eine Radkraftübertragung, wobei Magnetringe jeweils aus sektorenförmigen Magneten bestehen. Weiterhin bestehen die Magnetringe jeweils aus einem Magnetaufnahmegehäuse und mehreren einzelnen Magneten. Die einzelnen Magnete sind direkt nebeneinanderliegend vorgesehen.

DE H 11472 VIII d/21d AZ zeigt eine magentische Kupplung, wobei zwei Magnetringe konzentrisch zueinander angeordnet sind und die Magnetringe derart angeordnet sind, dass ein Magnetring den andern Magnetring umschließt.

DE 32 02 074 A1 zeigt eine dauermagnetisch erregte Zentraldrehkupplung, wobei einzelne Magnete mit einem jeweiligen Abstand zwischen ihnen vorgesehen sind.

Der Erfindung liegt die Aufgabe zugrunde, eine Vorrichtung zur Dämpfung einer Drehbewegung unter Verwendung eines in Flüssigkeit geführten Verdrängungskörpers mit einfachem Aufbau zur Verfügung zu stellen, welche Vorrichtung bezüglich der Dämpfung flexibel einsetzbar ist.

Diese Aufgabe wird erfindungsgemäß durch die im Anspruch 1 angegebene Vorrichtung gelöst. Die abhängigen Ansprüche 2 bis 13 zeigen spezielle Ausführungsformen der Vorrichtung gemäß Anspruch 1.

Bei der erfindungsgemäßen Vorrichtung zur Dämpfung einer Drehbewegung sind insbesondere ein erster Magnet und ein zweiter Magnet jeweils auf der Seite einer sich drehenden Achse und auf der Seite der Dämpfungsvorrichtung vorgesehen. Über das durch die Magnete erzeugte Magnetfeld wird eine berührungslose Kopplung zwischen der sich drehenden Achse und der Dämpfungsvorrichtung erreicht. Auf der Seite der Dämpfungsvorrichtung ist der Magnet oder Magnetkörper in Flüssigkeit in einem geschlossenen Gehäuse vorgesehen und über eine Drehachse mit einem Verdrängungskörper verbunden. Durch eine Drehung der sich drehenden Achse wird über die magnetische Kopplung, und somit berührungslos, der Magnet der Dämpfungsvorrichtung und somit auch der Verdrängungskörper gedreht, wodurch dann durch seine Drehbewegung in der Flüssigkeit das Drehmoment von ihm und damit dem Magneten in der Flüssigkeit gedämpft wird, was wiederum die Drehbewegung der sich drehenden Achse dämpft. Weiterhin erfolgt bereits über die magnetische Kopplung eine Dämpfung der Drehbewegung. Die im geschlossenen Gehäuse der Dämpfungsvorrichtung eingefüllte Flüssigkeit ist Öl. Gemäß der Erfindung wird die Vorrichtung zur Dämpfung der Drehbewegung eines Lenkrads mit elektrischem Lenkantrieb eingesetzt. Der Einsatz erfolgt vorzugsweise bei Flurförderzeugen.

Erfindungsgemäß wird somit eine einfache Möglichkeit eines Aufbaus für eine Dämpfungsvorrichtung erreicht, die relativ flexibel in Bezug auf eine sich drehende Achse eingesetzt werden kann. Durch die berührungslose Übertragung der Dämpfung ist keine Dichtung am Gehäuse mehr nötig und sind dadurch der Anzahl von möglichen Arbeitszyklen praktisch keine Grenzen mehr auferlegt.

Der erste Magnet und zweite Magnet sind vorzugsweise jeweils als erster und als zweiter Magnetring ausgebildet.

Vorzugsweise sind der erste Magnetring und zweite Magnetring konzentrisch zueinander angeordnet. Die Magnetringe bestehen vorzugsweise jeweils aus radial nebeneinander angeordneten Magneten, wobei nebeneinander angeordnete Magnete jeweils eine entgegengesetzte Polarität haben.

Gemäß einer ersten bevorzugten Ausführungsform sind der erste Magnetring und zweite Magnetring konzentrisch beabstandet angeordnet. Dabei sind die Magnetringe vorzugsweise jeweils in axialer Richtung magnetisiert und ist die Magnetisierungsrichtung des ersten Magnetrings jeweils entgegengesetzt zu derjenigen des zweiten Magnetrings.

Die Magnetringe können bevorzugt jeweils aus sektorenförmigen Magneten bestehen.

Gemäß einer zweiten bevorzugten Ausführungsform sind der erste Magnetring und zweite Magnetring derart angeordnet, dass der erste Magnetring den zweiten Magnetring umschließt.

Dabei sind die Magnetringe vorzugsweise jeweils in radialer Richtung magnetisiert und ist die Magnetisierungsrichtung des ersten Magnetrings jeweils entgegengesetzt zu derjenigen des zweiten Magnetrings.

Bei beiden bevorzugten Ausführungsformen können die Magnetringe jeweils aus einem Magnetaufnahmegehäuse und mehreren einzelnen Magneten bestehen. Dabei sind die einzelnen Magnete vorzugsweise direkt nebeneinanderliegend oder mit einem jeweiligen Abstand zwischen ihnen vorgesehen.

Das Lenkrad kann an der Drehachse angebracht ist. Es kann aber ebenso an dem Gehäuse angebracht sein, in welchem Fall die Drehachse in Bezug zum Lenkrad eine stehende Achse wird.

Die angegebenen und weitere Merkmale und Einzelheiten der Erfindung werden einem Fachmann auf dem Gebiet aus der folgenden detaillierten Beschreibung und den beigefügten Zeichnungen klarer werden, die Merkmale der vorliegenden Erfindung anhand von Beispielen darstellt und wobei:
- Fig. 1: eine schematische Ansicht einer Dämpfungsvorrichtung gemäß einer ersten bevorzugten Ausführungsform der Erfindung zeigt;
- Fig. 2: eine schematische Ansicht einer Magnetanordnung für die in Figur 1 gezeigte Dämpfungsvorrichtung zeigt;
- Fig. 3: eine schematische Ansicht einer weiteren Magnetanordnung für die in Figur 1 gezeigte Dämpfungsvorrichtung zeigt;
- Fig. 4: eine schematische Ansicht einer Dämpfungsvorrichtung gemäß einer zweiten bevorzugten Ausführungsform der Erfindung zeigt;
- Fig. 5: eine schematische Ansicht einer Magnetanordnung für die in Figur 4 gezeigte Dämpfungsvorrichtung zeigt; und
- Fig. 6: eine schematische Ansicht einer weiteren Magnetanordnung für die in Figur 4 gezeigte Dämpfungsvorrichtung zeigt.

Im Folgenden wird die vorliegende Erfindung anhand bevorzugter Ausführungsformen unter Bezugnahme auf die beigefügte Zeichnung detailliert erklärt.

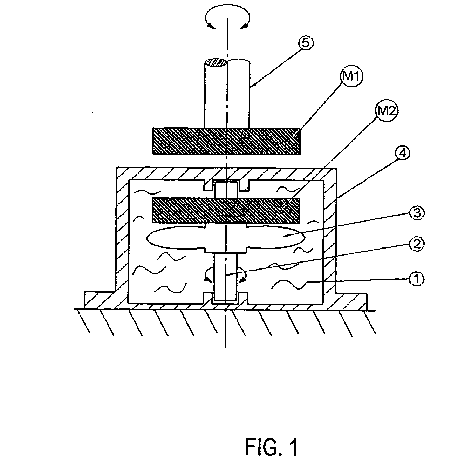

Die Figur 1 zeigt eine schematische Ansicht einer ersten bevorzugten Ausführungsform der erfindungsgemäßen Dämpfungsvorrichtung. An einer sich, beispielsweise bei einer Betätigung eines Lenkrads mit diesem, drehenden Drehachse 5 ist ein erster Magnet M1 vorgesehen. Mit einem Abstand zu dem Magneten M1 ist ein mit Flüssigkeit 1 gefülltes Gehäuse 4 vorgesehen, in welchem eine Achse 2 gelagert ist, an der ein zweiter Magnet M2 vorgesehen ist. Weiterhin ist an der Achse 2 ein Verdrängungskörper 3 angebracht, der gemäß einer gewünschten Dämpfung ausgebildet sein kann und hier in Form eines Schaufelrads gezeigt ist. Wenn sich die Drehachse 5 dreht, dreht sich mit dieser auch der erste Magnet M1. Über die magnetische Kopplung zwischen dem ersten Magneten M1 und dem zweiten Magneten M2 dreht sich auch der Magnet M2 und damit die Achse 2 mit dem Verdrängungskörper 3, der durch seine Drehbewegung in der Flüssigkeit 1, die vorzugsweise Öl ist, das Drehmoment der Achse 2 dämpft. Diese Dämpfung wird dann über die magnetische Kopplung zwischen dem zweiten Magneten M2 und dem ersten Magneten M1 auf die Drehachse 5 und eine damit verbundene Betätigungseinrichtung, wie beispielsweise ein Lenkrad, übertragen.

In Figur 1 sind der erste Magnet M1 und der zweite Magnet M2, die bevorzugt Magnetringe sind, konzentrisch zueinander angeordnet. Zudem sind sie gemäß der in Figur 1 gezeigten ersten Ausführungsform konzentrisch beabstandet bzw. übereinander angeordnet.

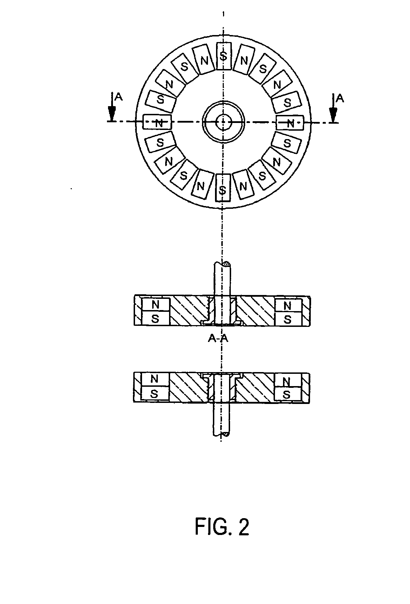

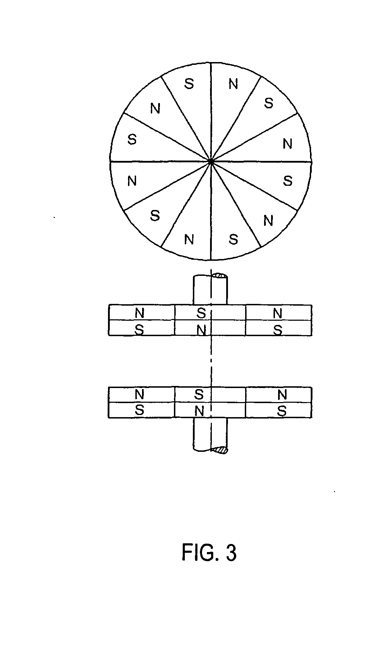

Nun werden unter Bezugnahme auf die Figuren 2 und 3 mögliche Magnetanordnungen des ersten Magneten M1 und des zweiten Magneten M2 für die Dämpfungsvorrichtung gemäß der in Figur 1 gezeigten ersten Ausführungsform beschrieben werden.

Figur 2 zeigt insbesondere eine Draufsicht auf einen Magnetring, der aus radial nebeneinander angeordneten Magneten besteht. Vorzugsweise besteht der gezeigte Magnetring jeweils aus einem Magnetaufnahmegehäuse und mehreren einzelnen Magneten. Die Magnete können direkt nebeneinanderliegend oder mit einem jeweiligen Abstand zwischen ihnen vorgesehen sein. Benachbart angeordnete Magnete haben dabei eine jeweils entgegengesetzte Polarität, wie es jeweils durch N und S angezeigt ist.

Weiterhin zeigt die Figur 2 unter der Draufsicht auf einen Magnetring eine Anordnung des ersten Magnetrings in Bezug zu dem zweiten Magnetring. Durch die Bezeichnung der Magnetisierungen mit N und S ist zu erkennen, dass die Magnetringe jeweils in axialer Richtung magnetisiert sind und dass weiterhin die Magnetisierungsrichtung (in axialer Richtung) des ersten Magnetrings jeweils entgegengesetzt zu derjenigen des zweiten Magnetrings ist.

Gleich der Figur 2 zeigt die Figur 3 eine Draufsicht auf einen Magnetring. Dieser Magnetring besteht aus sektorenförmigen Magneten. Benachbart angeordnete Magnete haben, wie die Magnete der Figur 2, dabei eine jeweils entgegengesetzte Polarität, wie es jeweils durch N und S angezeigt ist.

Weiterhin zeigt die Figur 3 unter der Draufsicht auf einen Magnetring eine Anordnung des ersten Magnetrings in Bezug zu dem zweiten Magnetring. Durch die Bezeichnung der Magnetisierungen mit N und S ist zu erkennen, dass die Magnetringe jeweils in axialer Richtung magnetisiert sind und dass weiterhin die Magnetisierungsrichtung (in axialer Richtung) des ersten Magnetrings jeweils entgegengesetzt zu derjenigen des zweiten Magnetrings ist.

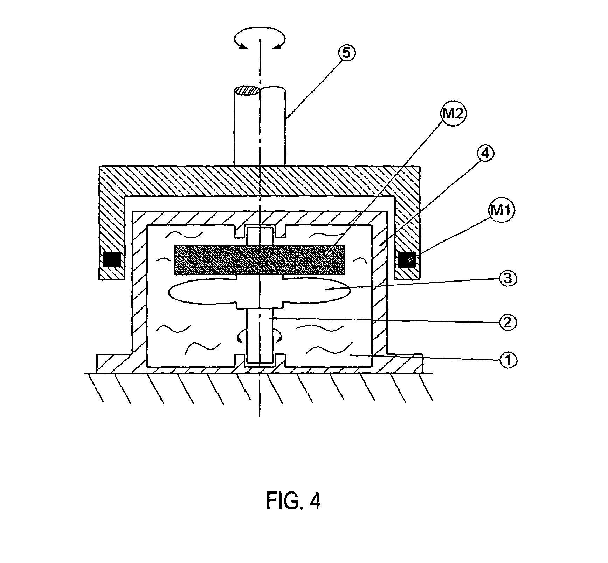

Die Figur 4 zeigt eine schematische Ansicht einer zweiten bevorzugten Ausführungsform der erfindungsgemäßen Dämpfungsvorrichtung. Grundsätzlich ist die Dämpfungsvorrichtung der Figur 4 genauso aufgebaut wie die Dämpfungsvorrichtung der Figur 1, so dass eine detaillierte Beschreibung hier weggelassen wird.

Wie in Figur 1 sind der erste Magnet M1 und der zweite Magnet M2 der Figur 4, die bevorzugt Magnetringe sind, konzentrisch zueinander angeordnet. Gegensätzlich zu der in Figur 1 gezeigten Ausführungsform sind jedoch gemäß der Ausführungsform der Figur 4 der erste Magnet M1 und der zweite Magnet M2 derart angeordnet, dass der erste Magnet oder Magnetring M1 den zweiten Magneten oder Magnetring M2 umschließt.

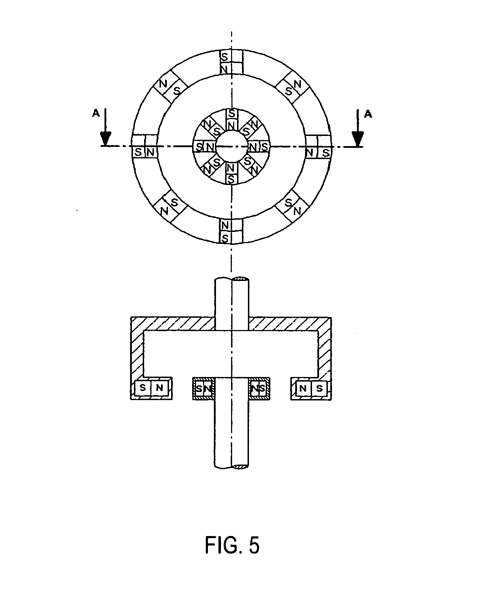

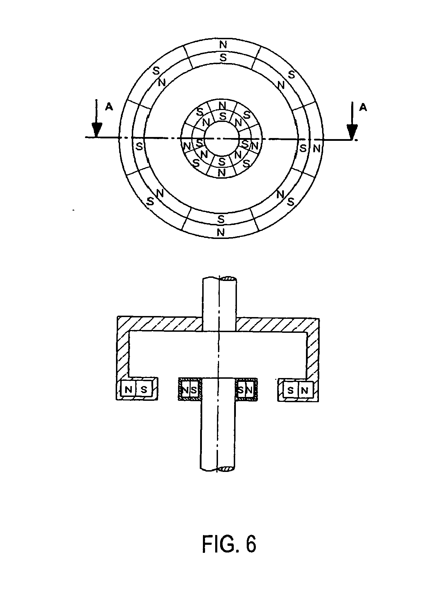

Nun werden unter Bezugnahme auf die Figuren 5 und 6 mögliche Magnetanordnungen des ersten Magneten M1 und des zweiten Magneten M2 für die Dämpfungsvorrichtung gemäß in Figur 4 gezeigten der zweiten Ausführungsform beschrieben werden.

Die Figuren 5 und 6 zeigen insbesondere jeweils eine Draufsicht auf die Magnetringe, die aus radial nebeneinander angeordneten Magneten besteht. Vorzugsweise besteht der gezeigte Magnetring jeweils aus einem Magnetaufnahmegehäuse und mehreren einzelnen Magneten. Die Magnete sind gemäß der Figur 5 mit einem jeweiligen Abstand zwischen ihnen vorgesehen, während sie gemäß der Figur 6 direkt nebeneinanderliegend vorgesehen sind. Benachbart angeordnete Magnete haben dabei eine jeweils entgegengesetzte Polarität, wie es jeweils durch N und S angezeigt ist.

Weiterhin zeigen die Figuren 5 und 6 unter der Draufsicht auf die Magnetringe eine Anordnung des ersten Magnetrings in Bezug zu dem zweiten Magnetring. Durch die Bezeichnung der Magnetisierungen mit N und S ist zu erkennen, dass die Magnetringe jeweils in radialer Richtung magnetisiert sind und dass weiterhin die Magnetisierungsrichtung (in radialer Richtung) des ersten Magnetrings jeweils entgegengesetzt zu derjenigen des zweiten Magnetrings ist.

Die erfindungsgemäße Dämpfungsvorrichtung ist einfach aufgebaut und zeigt insbesondere eine große Flexibilität bezüglich ihres Einsatzes. Insbesondere ist ihre Lebendauer im Vergleich mit bekannten Dämpfungsvorrichtungen unter Verwendung von in Flüssigkeit geführten Verdrängungskörpern deutlich erhöht.

Insbesondere ist die erfindungsgemäße Dämpfungsvorrichtung zum Einsatz für eine Lenkvorrichtung, wie ein Lenkrad mit elektrischem Lenkantrieb, vorzugsweise für Flurförderzeuge, geeignet, um ein Lenkgefühl für einen Bediener zu verbessern. Das Lenkrad kann dann an der Drehachse angebracht sein. Es kann aber ebenso an dem Gehäuse angebracht sein, in welchem Fall die Drehachse in Bezug zum Lenkrad eine stehende Achse wird.

Die erfindungsgemäße Dämpfungsvorrichtung ist flexibler als es Dämpfungsvorrichtungen sind, die eine Berührung zwischen Lenkvorrichtung und Dämpfungsvorrichtung benötigen. Eine Dämpfung wird durch die magnetische Kopplung und auch durch den vorgesehenen Verdrängungskörper erreicht. Es kann durch erfindungsgemäße Dämpfungsvorrichtung auf relative einfache Weise erreicht werden, dass ein Bediener kein unangenehmes Gefühl beim Bedienen eines Lenkrads mit elektrischem Lenkantrieb hat.

## Patentansprüche

1. Vorrichtung zum Einsatz zur Dämpfung der Drehbewegung eines Lenkrads mit elektrischem Lenkantrieb, wobei an einer Drehachse (5) ein sich mit der Drehachse (5) drehender erster Magnet (M1) vorgesehen ist, dessen Drehbewegung magnetisch, und somit berührungslos, auf einen zweiten Magnet (M2) übertragen wird, der innerhalb eines mit einer Flüssigkeit (1) gefüllten geschlossenen Gehäuses (4) mit einer Achse (2) verbunden ist und sich mit dieser dreht, wobei mit der Achse (2) weiterhin ein Verdrängungskörper (3) verbunden ist und sich mit dieser dreht, wobei die Flüssigkeit (1) Öl ist.

2. Vorrichtung nach Anspruch 1, **dadurch gekennzeichnet, dass** der erste Magnet (M1) und zweite Magnet (M2) jeweils als erster und als zweiter Magnetring ausgebildet sind.

3. Vorrichtung nach Anspruch 2, **dadurch gekennzeichnet, dass** der erste Magnetring (M1) und zweite Magnetring (M2) konzentrisch zueinander angeordnet sind.

4. Vorrichtung nach Anspruch 2 oder 3, **dadurch gekennzeichnet, dass** die Magnetringe (M1, M2) jeweils aus radial nebeneinander angeordneten Magneten bestehen, wobei nebeneinander angeordnete Magnete jeweils eine entgegengesetzte Polarität (N, S) haben.

5. Vorrichtung nach Anspruch 3 oder 4, **dadurch gekennzeichnet, dass** der erste Magnetring (M1) und der zweite Magnetring (M2) konzentrisch beabstandet angeordnet sind.

6. Vorrichtung nach Anspruch 5, **dadurch gekennzeichnet, dass** die Magnetringe (M1, M2) jeweils in axialer Richtung magnetisiert sind und die Magnetisierungsrichtung des ersten Magnetrings (M1) jeweils entgegengesetzt zu derjenigen des zweiten Magnetrings (M2) ist.

7. Vorrichtung nach Anspruch 5 oder 6, **dadurch gekennzeichnet, dass** die Magnetringe (M1, M2) jeweils aus sektorenförmigen Magneten bestehen.

8. Vorrichtung nach Anspruch 3 oder 4, **dadurch gekennzeichnet, dass** der erste Magnetring (M1) und zweite Magnetring (M2) derart angeordnet sind, dass der erste Magnetring (M1) den zweiten Magnetring umschließt.

9. Vorrichtung nach Anspruch 8, **dadurch gekennzeichnet, dass** die Magnetringe (M1, M2) jeweils in radialer Richtung magnetisiert sind und die Magnetisierungsrichtung des ersten Magnetrings (M1) jeweils entgegengesetzt zu derjenigen des zweiten Magnetrings (M2) ist.

10. Vorrichtung nach Anspruch 5, 6, 8 oder 9, **dadurch gekennzeichnet, dass** die Magnetringe (M1, M2) jeweils aus einem Magnetaufnahmegehäuse und mehreren einzelnen Magneten bestehen.

11. Vorrichtung nach Anspruch 10, **dadurch gekennzeichnet, dass** die einzelnen Magnete direkt nebeneinanderliegend oder mit einem jeweiligen Abstand zwischen ihnen vorgesehen sind.

12. Vorrichtung nach einem der vorangehenden Ansprüche, **dadurch gekennzeichnet, dass** das Lenkrad an der Drehachse (5) angebracht ist.

13. Vorrichtung nach einem der Anspruche 1 bis 11, **dadurch gekennzeichnet, dass** das Lenkrad an dem Gehäuse (4) angebracht ist.
